# EUROPÄISCHE PATENTSCHRIFT

(11) **EP 3 765 941 B1**
(45) Veröffentlichungstag und Bekanntmachung des Hinweises auf die Patenterteilung: **31.12.2025**
(21) Anmeldenummer: 19706536.0
(22) Anmeldetag: 18.02.2019
(51) Int. Cl.: G06F 3/01, B60K 35/10, B60K 35/28, B60K 35/65, B60K 35/85, B60K 35/235, B60K 35/81

(54) **VERFAHREN UND SYSTEM ZUR STEUERUNG EINER ANZEIGE EINES AUGMENTED-REALITY-GERÄTES UND COMPUTERPROGRAMM MIT INSTRUKTIONEN ZUR DURCHFÜHRUNG DES VERFAHRENS**
METHOD AND SYSTEM FOR CONTROLLING A DISPLAY OF AN AUGMENTED REALITY DEVICE AND COMPUTER PROGRAM WITH INSTRUCTIONS FOR CARRYING OUT THE METHOD
PROCÉDÉ ET SYSTÈME DE COMMANDE D'UN AFFICHAGE D'UN DISPOSITIF DE RÉALITÉ AUGMENTÉE ET PROGRAMME INFORMATIQUE AVEC DES INSTRUCTIONS POUR LA MISE EN OEUVRE DU PROCÉDÉ

(30) Priorität: 14.03.2018 DE 102018203865
(43) Veröffentlichungstag der Anmeldung: 20.01.2021
(73) Patentinhaber: VOLKSWAGEN AKTIENGESELLSCHAFT, 38440 Wolfsburg (DE)
(72) Erfinder: TÜMLER, Johannes, 39167 Wellen (DE); HAAR, Adrian, 30173 Hannover (DE)
(86) Internationale Anmeldenummer: PCT/EP2019/053954
(87) Internationale Veröffentlichungsnummer: WO 2019/174862

(56) Entgegenhaltungen:
- WO-A1-2017/115365
- US-A1- 2014 306 994
- US-A1- 2015 178 990
- US-A1- 2018 005 429
- US-A1- 2018 039 076

## Beschreibung

Die vorliegende Erfindung betrifft ein Verfahren und ein System zur Steuerung einer Anzeige eines Augmented-Reality-Gerätes. Die Erfindung betrifft weiterhin ein Computerprogramm mit Instruktionen zur Durchführung des Verfahrens.

Bereits seit Jahren lässt sich eine zunehmende Verbreitung digitaler Technologien in der Gesellschaft feststellen. Es steht zu erwarten, dass diese Digitalisierung der Gesellschaft im Alltag deutlich zunehmen wird. Virtual- und Augmented-Reality-Technologien
und -Anwendungen stellen eine besondere Ausprägung der Digitalisierung dar. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet. Für die Darstellung von AR-Anzeigen können beispielsweise Augmented-Reality-Brillen genutzt werden. Eine Augmented-Reality-Brille wird wie eine normale Brille getragen, weist aber eine oder mehrere Projektionseinheiten oder Anzeigen auf, mit deren Hilfe dem Träger der Brille Informationen vor die Augen oder direkt auf die Netzhaut projiziert werden können. Die Brille ist dabei so gestaltet, dass der Träger auch die Umgebung wahrnehmen kann. Neue Technologien für Augmented-Reality-Brillen, beispielsweise Lichtfeldtechnologie, Fortschritte in der verwendeten Batterietechnik sowie der Einstieg großer Unternehmen in diese lassen eine steigende Akzeptanz dieser Geräte erwarten.

Alternativ können AR-Anzeigen auch mittels Head-up-Displays (HUD) generiert werden, insbesondere im Automobilbereich. Bei einem Head-up Display eines Kraftfahrzeugs werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist.

Insgesamt ist absehbar, dass Augmented-Reality-Brillen, Augmented-Reality-Smartphones und Augmented-Reality-Head-up-Displays bei Endkunden zunehmend stärker im Einsatz sein werden. Vor diesem Hintergrund stellt sich die Frage, in welcher Weise mehrere Anwender gemeinsam eine erweiterte Realität erfahren können, wie sie z.B. eine augmentierte Information gleichzeitig sehen können.

In diesem Zusammenhang beschreibt die US 2013/0135180 A1 ein System für die verteilte Zusammenarbeit mehrerer Nutzer. Ein aktiver Nutzer trägt eine Datenbrille, die mit einem zentralen Rechner verbunden ist. Der zentrale Rechner empfängt Umgebungsinformationen von der Datenbrille und generiert daraus ein Raummodell. Zudem empfängt der zentrale Rechner Informationen zu einem Objekt, an dem gearbeitet werden soll, sowie Eingaben des aktiven Nutzers sowie weiterer Nutzer. Unter Berücksichtigung der Eingaben der Nutzer wird ein virtuelles Abbild des Objektes in das Raummodell eingefügt und dem aktiven Nutzer angezeigt.

Die US 2014/0098131 A1 beschreibt ein Verfahren zur Nutzung von Augmentationen für Augmented-Reality-Darstellungen. Gemäß dem Verfahren werden Augmentationsdaten empfangen, die einer ersten Augmentation zugeordnet sind, die durch ein entfernt befindliches Augmented-Reality-Gerät für eine Augmented-Reality-Darstellung einer ersten tatsächlichen Situation genutzt wurde. Weiterhin wird eine zweite Augmentation im Rahmen einer Augmented-Reality-Darstellung einer zweiten tatsächlichen Situation genutzt. Die Anzeige der zweiten Augmentation hängt dabei zumindest teilweise von den empfangenen Augmentationsdaten ab. Schließlich werden an das entfernt befindliche Augmented-Reality-Gerät Informationen über die Verwendung oder Nicht-Verwendung der Augmentationsdaten übermittelt.

Die US 2015/0178990 A1 beschreibt ein Verfahren zur Interaktion in einem Fahrzeug. Das Fahrzeug weist ein Head-up-Display für den Fahrer sowie ein einfaches Display für den Beifahrer auf. Als Reaktion auf einen Befehl des Fahrers wird ein Augmentationsobjekt basierend auf dem aktuellen Blickpunkt des Fahrers generiert und auf dem Display des Beifahrers dargestellt. Der Beifahrer kann mit dieser Darstellung interagieren. Als Reaktion auf eine solche Interaktion werden Augmentationsobjekte für das Head-up-Display erzeugt und dem Fahrer angezeigt.

Die WO 2017/115365 A1 beschreibt ein Verfahren zur Verwendung der Sichtlinie oder Blickrichtung eines Benutzers, um angezeigte Daten anzureichern und verschiedene Anzeigen und Instrumente zu steuern. Die Sichtlinie des Benutzers wird verfolgt und entsprechende Elemente in einer Szene, auf die der Benutzer blickt, werden identifiziert. Entsprechende angezeigte Daten werden dann in Bezug auf die identifizierten Elemente angereichert oder anderweitig manipuliert.

Oftmals bleibt für einen Nutzer eines Augmented-Reality-Gerätes unklar, welche Objekte gerade durch Mitmenschen betrachtet werden. Der Nutzer kann beispielsweise nur erahnen, welches Objekt ein anderer Nutzer meint oder worauf er zeigt.

In diesem Zusammenhang beschreibt die US 2018/0005429 A1 ein Verfahren für den Beitritt eines Nutzers eines kopfmontierten Displays (HMD) zu Szenen der virtuellen Realität (VR). Bei dem Verfahren wird eine erste Perspektive einer VR-Szene für ein erstes HMD eines ersten Nutzers bereitgestellt. Wird nun ein Hinweis empfangen, dass ein zweiter Nutzer eines zweiten HMD anfordert, sich der bereitgestellten VR-Szene anzuschließen, werden reale Positions- und Orientierungsdaten des zweiten HMD relativ zum ersten HMD ermittelt. Auf Basis dieser Daten wird eine zweite Perspektive der VR-Szene bereitgestellt. In den VR-Szenen können

Blickpunkte der verschiedenen Nutzer angezeigt werden.

Die US 2018/0039076 A1 beschreibt ein Verfahren zur Erleichterung der Kommunikation zwischen Benutzern, die sich einen visuellen Hinweis teilen. Des Blickpunkt eines ersten Benutzers wird als Näherung im dreidimensionalen Raum bestimmt und an einen zweiten Benutzer übermittelt. Auf der Grundlage des Blickpunktes wird ein Blickfokus des ersten Benutzers für den zweiten Benutzer angezeigt.

Die US 2014/0306994 A1 beschreibt ein Verfahren, mit dem personalisierte virtuelle Anzeigetafeln in einer Augmented-Reality-Umgebung erzeugt und angezeigt werden können. Die personalisierten virtuellen Anzeigetafeln erlauben den Austausch von personalisierten Informationen zwischen Personen in einer Umgebung, die verschiedene Bekanntschaftsgrade haben können.

Es ist eine Aufgabe der Erfindung, Lösungen aufzuzeigen, die ein geteiltes Erleben der Umgebung durch eine Vielzahl von Anwendern ermöglichen.

Diese Aufgabe wird durch ein Verfahren mit den Merkmalen des Anspruchs 1, durch ein Computerprogramm mit Instruktionen gemäß Anspruch 6 und durch ein System mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige eines Augmented-Reality-Gerätes eines ersten Nutzers die Schritte:
- Empfangen von Informationen zu einem Blickpunkt zumindest eines zweiten Nutzers durch ein Backend;
- Übermitteln des Blickpunktes des zweiten Nutzers an das Augmented-Reality-Gerät des ersten Nutzers durch das Backend; und
- Anzeigen des Blickpunktes des zweiten Nutzers in der Anzeige des Augmented-Reality-Gerätes des ersten Nutzers, wobei der Blickpunkt des zweiten Nutzers nur dann vom Backend an das Augmented-Reality-Gerät des ersten Nutzers übermittelt wird, wenn sich das Augmented-Reality-Gerät des ersten Nutzers in der Nähe des zweiten Nutzers befindet, wobei vom zweiten Nutzer individuell regelbar ist, bis zu welcher Entfernung ein Gerät als in der Nähe gilt.

Entsprechend enthält ein Computerprogramm Instruktionen, die bei Ausführung durch einen Computer den Computer zur Ausführung der folgenden Schritte zur Steuerung einer Anzeige eines Augmented-Reality-Gerätes eines ersten Nutzers veranlassen:
- Empfangen von Informationen zu einem Blickpunkt zumindest eines zweiten Nutzers durch ein Backend;
- Übermitteln des Blickpunktes des zweiten Nutzers an das Augmented-Reality-Gerät des ersten Nutzers durch das Backend; und
- Anzeigen des Blickpunktes des zweiten Nutzers in der Anzeige des Augmented-Reality-Gerätes des ersten Nutzers, wobei der Blickpunkt des zweiten Nutzers nur dann vom Backend an das Augmented-Reality-Gerät des ersten Nutzers übermittelt wird, wenn sich das Augmented-Reality-Gerät des ersten Nutzers in der Nähe des zweiten Nutzers befindet, wobei vom zweiten Nutzer individuell regelbar ist, bis zu welcher Entfernung ein Gerät als in der Nähe gilt.

Analog dazu weist ein System zur Steuerung einer Anzeige eines Augmented-Reality-Gerätes eines ersten Nutzers auf:
- ein Backend, das eingerichtet ist, Informationen zu einem Blickpunkt zumindest eines zweiten Nutzers zu empfangen und den Blickpunkt des zweiten Nutzers an das Augmented-Reality-Gerät des ersten Nutzers zu übermitteln; und
- eine Vorrichtung zur Steuerung der Anzeige des Augmented-Reality-Gerätes des ersten Nutzers, mit einem Eingang zum Empfangen des Blickpunktes des zweiten Nutzers vom Backend und einem Grafikgenerator zum Anzeigen des Blickpunktes des zweiten Nutzers in der Anzeige des Augmented-Reality-Gerätes des ersten Nutzers, wobei der Blickpunkt des zweiten Nutzers nur dann vom Backend an das Augmented-Reality-Gerät des ersten Nutzers übermittelt wird, wenn sich das Augmented-Reality-Gerät des ersten Nutzers in der Nähe des zweiten Nutzers befindet, wobei vom zweiten Nutzer individuell regelbar ist, bis zu welcher Entfernung ein Gerät als in der Nähe gilt.

Der oben benutzte Begriff Computer ist breit zu verstehen. Insbesondere umfasst er auch Steuergeräte und andere prozessorbasierte Datenverarbeitungsvorrichtungen.

Die erfindungsgemäßen Lösungen basieren auf dem Ansatz, dass die Fokuspunkte bzw. Blickpunkte von Nutzern geteilt werden. Dabei können die Nutzer einerseits Anwender eines Augmented-Reality-Gerätes sein, wodurch die Erfassung eines Blickpunktes erleichtert wird. Andererseits kann die Ermittlung des Blickpunktes auch bei Nutzern erfolgen, die kein Augmented-Reality-Gerät benutzen, sofern mittels einer Blickbeobachtung ihre jeweiligen Blickpunkte ermittelt werden können. Die geteilten Informationen können dann als Grundlage für eine Reihe von Anwendungen dienen und ermöglichen die Verwirklichung einer geteilten erweiterten Realität.

Gemäß einem Aspekt der Erfindung wird ein Objekt im Sichtfeld des Nutzers bestimmt. Informationen zum Objekt werden dann an das Backend übermittelt. Durch die kontinuierlich zunehmende verfügbare Rechenleistung in Kraftfahrzeugen oder Smartphones können immer komplexere Ansätze zur Objekterkennung umgesetzt werden. Die Information über Objekte, welche mittels der Objekterkennung erkannt und klassifiziert werden, kann mit der Information über die Blickrichtung des Anwenders kombiniert werden. Durch diese Fusion lassen sich auch dynamische Objekte, wie zum Beispiel andere Verkehrsteilnehmer, eindeutig identifizieren und gegebenenfalls durch digitale Informationen anreichern.

Gemäß einem Aspekt der Erfindung wird durch Erfassen einer Kopfausrichtung oder mittels Eye-Tracking eine Blickrichtung erfasst. Der Blickpunkt wird dann aus der Blickrichtung bestimmt. Für das Erfassen einer Blickrichtung existieren bereits zahlreiche Lösungen, so dass die Bestimmung des Blickpunktes kostengünstig umgesetzt werden kann. Beispielsweise können in Kraftfahrzeugen Fahrerbeobachtungskameras oder Innenraumkameras zur Überwachung der Kopfausrichtung genutzt werden. Auch aktuell verfügbare Datenbrillen stellen bereits Sensortechnologie zur Berechnung der Kopfposition und Kopfausrichtung eines Anwenders im Raum bereit. Die Kopfausrichtung entspricht dann zumindest annähernd der Blickrichtung. Als Blickpunkt kann dann z.B. der im Zentrum entlang der Sehachse befindliche Punkt oder ein Schnittpunkt der Sichtachse mit einem entlang der Sichtachse getroffenen Objekt bestimmt werden.

Die Übermittlung der Informationen an ein Backend ermöglicht eine vielseitige Nutzung der Informationen, beispielsweise für eine unternehmensspezifische Analyse oder für einen nutzerübergreifenden Informationsaustausch. Abhängig vom Anwendungsfall ist es nicht zwingend erforderlich, den Blickpunkt aller relevanten Nutzer jeweils für alle Anwender bereitzustellen. Es kann auch wünschenswert sein, den Blickpunkt jeweils nur zu bestimmen und zu Zwecken des Mobilitätsanbieters auszuwerten, ihn jedoch nicht den einzelnen Anwendern mitzuteilen.

Gemäß einem Aspekt der Erfindung erfolgt im Backend eine zeitbezogene Auswertung der übermittelten Informationen. Dabei kann beispielsweise der Zeitpunkt der Erfassung den Blickpunktes ausgewertet werden. Diese Art der zeitbezogenen Auswertung erlaubt es beispielsweise, festzustellen, wie sich das Interesse von Nutzern an bestimmten Objekten im Laufe der Zeit entwickelt. Ebenso kann auf diese Weise erfasst werden, ob mehrere Nutzer zur gleichen Zeit oder zumindest innerhalb eines bestimmten Zeitraums ihren Blick auf die gleichen Stelle richten. Alternativ oder zusätzlich kann auch der Zeitraum ausgewertet werden, über den der Blick eines Nutzers in einem bestimmten Bereich verharrt. Überschreitet dieser Zeitraum eine definierte Mindestdauer, kann dies als Auslöser für weitergehende Schritte genutzt werden.

Gemäß einem Aspekt der Erfindung unterliegt das Übermitteln von Informationen an ein Augmented-Reality-Gerät oder an das Backend Privatsphäreneinstellungen der Nutzer. Vom Nutzer beeinflussbare Privatsphäreneinstellungen erlauben es, den Datenschutz zu gewährleisten bzw. dem Nutzer die Möglichkeit zu geben, die Verteilung der erfassten Informationen zu kontrollieren. Beispielsweise kann der Nutzer festlegen, ob und welche Informationen erfasst bzw. übermittelt werden und in welcher Form und in welchem Umfang diese ausgewertet oder an andere Nutzer weitergegeben werden.

Gemäß einem Aspekt der Erfindung wird der Blickpunkt des zweiten Nutzers in der Anzeige des Augmented-Reality-Gerätes des ersten Nutzers salient dargestellt. Durch die saliente Darstellung ist für einen Nutzer sofort ersichtlich, wohin ein anderer Nutzer schaut, auch wenn sich der Blickpunkt lediglich in dessem äußeren Sichtbereich befindet. Alternativ oder zusätzlich dazu werden Elemente in der Anzeige des Augmented-Reality-Gerätes des ersten Nutzers gekennzeichnet, wenn sie auch dem zweiten Nutzer angezeigt werden. Durch diese Kennzeichnung von Elementen in der Anzeige wird der Nutzer deutlich darauf hingewiesen, dass Informationen zu seinem Blickpunkt geteilt werden.

Besonders vorteilhaft wird ein erfindungsgemäßes Verfahren in einem Augmented-Reality-Gerät eingesetzt, beispielsweise in einer Augmented-Reality-Brille, in einem Augmented-Reality-Smartphone oder in einem Augmented-Reality-Head-up-Display. Ein solches Augmented-Reality-Gerät kann beispielsweise in einem Fahrzeug, insbesondere einem Kraftfahrzeug, eingesetzt werden. Die Nutzung ist aber grundsätzlich bei jeglicher Form der Mobilität möglich, auch bei einer nicht motorisierten Fortbewegung. Bei der motorisierten Fortbewegung ist die Nutzung nicht auf den Fahrer beschränkt, auch Beifahrer, Fahrgäste oder sonstige nicht direkt in die Fahraufgabe eingebundene Personen können Nutzer eines entsprechenden Augmented-Reality-Gerätes sein.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch eine Augmented-Reality-Brille;
- Fig. 2: zeigt schematisch einen allgemeinen Aufbau einer Head-up-Display-Vorrichtung für ein Kraftfahrzeug;
- Fig. 3: zeigt schematisch ein Verfahren zum Bereitstellen von Informationen durch ein Augmented-Reality-Gerät;
- Fig. 4: zeigt eine erste Ausführungsform einer Vorrichtung zum Bereitstellen von Informationen durch ein Augmented-Reality-Gerät;
- Fig. 5: zeigt schematisch ein Verfahren zum Bereitstellen von Informationen zur Steuerung einer Anzeige eines Augmented-Reality-Gerätes;
- Fig. 6: zeigt eine erste Ausführungsform einer Vorrichtung zum Bereitstellen von Informationen zur Steuerung einer Anzeige eines Augmented-Reality-Gerätes;
- Fig. 7: zeigt schematisch ein Verfahren zur Steuerung einer Anzeige eines Augmented-Reality-Gerätes eines ersten Nutzers;
- Fig. 8: zeigt eine erste Ausführungsform einer Vorrichtung zur Steuerung einer Anzeige eines Augmented-Reality-Gerätes eines ersten Nutzers;
- Fig. 9: zeigt eine zweite Ausführungsform der Vorrichtungen aus Fig. 4, Fig. 6 und Fig. 8;
- Fig. 10: stellt schematisch ein Kraftfahrzeug dar, in dem eine erfindungsgemäße Lösung realisiert ist;
- Fig. 11: zeigt schematisch einen Systemdiagramm der erfindungsgemäßen Lösung; und
- Fig. 12: zeigt schematisch ein Anwendungsbeispiel der erfindungsgemäßen Lösung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

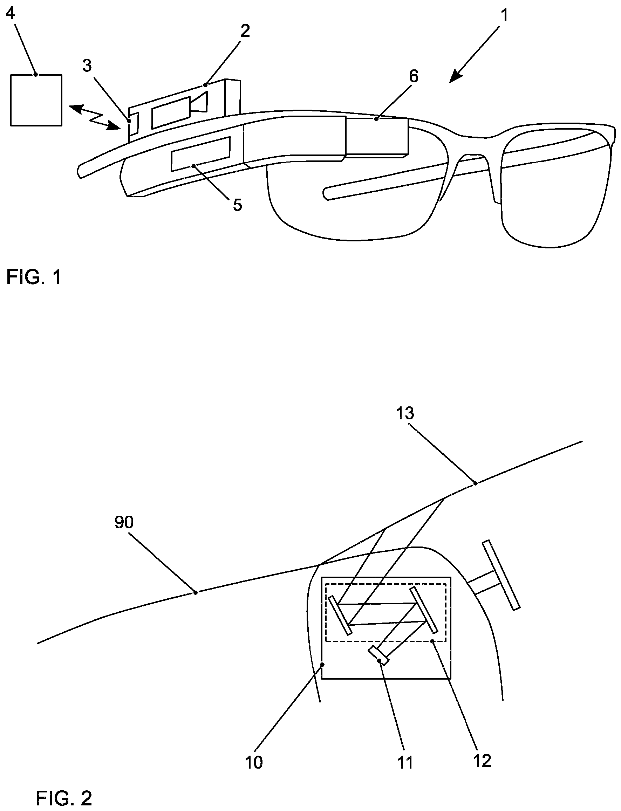

Fig. 1 zeigt schematisch eine Augmented-Reality-Brille 1 als Beispiel für eine Augmented-Reality-Display-Vorrichtung. Die Augmented-Reality-Brille 1 hat eine Kamera 2 zum Erfassen von Umgebungsdaten einer Umgebung der Augmented-Reality-Brille 1. Mittels einer Schnittstelle 3 besteht eine Verbindung zu einer externen Posenbestimmungsvorrichtung 4 zum Bestimmen einer Pose der Augmented-Reality-Brille 1 anhand der Umgebungsdaten. Die Posenbestimmungsvorrichtung 4 kann dazu beispielsweise Kanten oder markante Punkte in den Bilddaten detektieren und auswerten. Die Posenbestimmungsvorrichtung 4 kann natürlich auch Bestandteil der Augmented-Reality-Brille 1 sein. Mittels einer Grafikeinheit 5 kann die Anzeige der Augmented-Reality-Brille 1 entsprechend der ermittelten Pose angepasst werden. Dazu können die Posenbestimmungsvorrichtung 4 und die Grafikeinheit 5 miteinander Daten austauschen. Die Grafikeinheit 5 kann, wie im Beispiel dargestellt, Bestandteil der Augmented-Reality-Brille 1 sein oder über die Schnittstelle 3 mit der Augmented-Reality-Brille 1 verbunden sein. Die von der Grafikeinheit 5 generierte Anzeige wird durch eine Projektionseinheit 6 eingeblendet. Im Beispiel in Fig. 1 wird ein monokulares Display genutzt, d.h. nur vor einem Auge des Nutzers ist ein Display angeordnet. Die vorliegend beschriebene Lösung kann selbstverständlich auch mit einer Augmented-Reality-Brille 1 mit einem binokularen Display, bei dem pro Auge ein Display genutzt wird, oder mit einem binokularen Display, bei dem für beide Augen ein gemeinsames Display genutzt wird, realisiert werden.

Fig. 2 zeigt schematisch ein Head-up-Display 10 als Beispiel für eine Augmented-Reality-Display-Vorrichtung für ein Kraftfahrzeug 90. Mit Hilfe des Head-up-Displays 10 können Inhalte auf einer Projektionsfläche 13 des Kraftfahrzeugs 90 angezeigt werden, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 11 erzeugt und mit Hilfe eines optischen Moduls 12 auf die Projektionsfläche 13 projiziert. Typischerweise erfolgt die Projektion dabei in einen Bereich der Frontscheibe oberhalb des Lenkrades. Die bildgebende Einheit 11 kann beispielsweise ein LCD-TFT-Display sein. Das Head-up-Display 10 ist in der Regel in einem Armaturenbrett des Kraftfahrzeugs 90 verbaut.

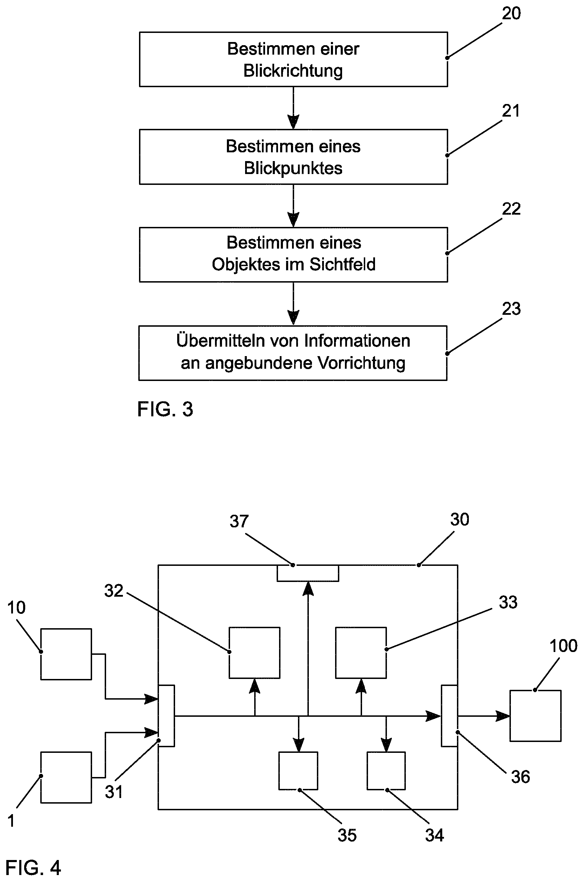

Fig. 3 zeigt schematisch ein Verfahren zum Bereitstellen von Informationen durch ein Augmented-Reality-Gerät. Bei dem Verfahren wird ein Blickpunkt eines Nutzers des Augmented-Reality-Gerätes bestimmt 21. Dazu kann beispielsweise zunächst durch Erfassen einer Kopfausrichtung oder mittels Eye-Tracking eine Blickrichtung des Nutzers erfasst werden 20. Der Blickpunkt kann dann aus der Blickrichtung bestimmt werden. Schließlich werden Informationen zum Blickpunkt des Nutzers an eine an das Augmented-Reality-Gerät angebundene Vorrichtung übermittelt 23. Die angebundene Vorrichtung kann beispielsweise ein über ein Netzwerk angebundenes Backend sein. Zusätzlich kann ein Objekt im Sichtfeld des Nutzers bestimmt werden 22. Informationen zum Objekt können dann ebenfalls an die angebundene Vorrichtung übermittelt werden. Das Übermitteln 23 von Informationen kann dabei Privatsphäreneinstellungen des Nutzers unterliegen.

Fig. 4 zeigt eine vereinfachte schematische Darstellung einer ersten Ausführungsform einer Vorrichtung 30 zum Bereitstellen von Informationen durch ein Augmented-Reality-Gerät 1, 10. Die Vorrichtung 30 hat einen Eingang 31, über den beispielsweise Daten zu einer Blickrichtung eines Nutzers des Augmented-Reality-Gerätes 1, 10 empfangen werden können. Die Vorrichtung 30 hat zudem ein Blickpunktbestimmungsmodul 32 zum Bestimmen eines Blickpunktes des Nutzers. Der Blickpunkt kann beispielsweise aus der Blickrichtung bestimmt werden. Über einen Ausgang 36 der Vorrichtung 30 werden Informationen zumindest zum Blickpunkt des Nutzers an eine angebundene Vorrichtung ausgegeben. Die angebundene Vorrichtung kann beispielsweise ein über ein Netzwerk angebundenes Backend 100 oder ein Augmented-Reality-Gerät eines weiteren Nutzers sein. Das Übermitteln von Informationen kann dabei Privatsphäreneinstellungen des Nutzers unterliegen, die von einem Datenschutzmodul 33 umgesetzt werden.

Das Blickpunktbestimmungsmodul 32 und das Datenschutzmodul 33 können von einer Kontrolleinheit 34 gesteuert werden. Über eine Benutzerschnittstelle 37 können gegebenenfalls Einstellungen des Blickpunktbestimmungsmoduls 32, des Datenschutzmoduls 33 oder der Kontrolleinheit 34 geändert werden. Die in der Vorrichtung 30 anfallenden Daten können bei Bedarf in einem Speicher 35 der Vorrichtung 30 abgelegt werden, beispielsweise für eine spätere Auswertung oder für eine Nutzung durch die Komponenten der Vorrichtung 30. Das Blickpunktbestimmungsmodul 32, das Datenschutzmodul 33 sowie die Kontrolleinheit 34 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 31 und der Ausgang 36 können als getrennte Schnittstellen oder als eine kombinierte bidirektionale Schnittstelle implementiert sein. Im beschriebenen Beispiel ist die Vorrichtung 30 eine eigenständige Komponente. Sie kann aber ebenso in der Augmented-Reality-Display-Vorrichtung 1, 10 oder in einem Steuergerät der Augmented-Reality-Display-Vorrichtung 1, 10 integriert sein.

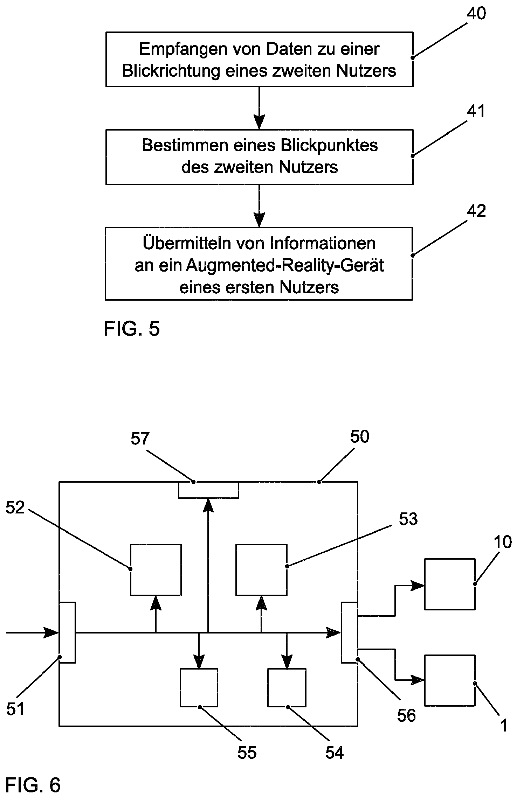

Fig. 5 zeigt schematisch ein Verfahren zum Bereitstellen von Informationen zur Steuerung einer Anzeige eines Augmented-Reality-Gerätes eines ersten Nutzers. Bei dem Verfahren wird ein Blickpunkt zumindest eines zweiten Nutzers ermittelt 41. Dazu können beispielsweise Daten zu einer Blickrichtung des zweiten Nutzers empfangen werden 40. Der Blickpunkt kann dann aus der Blickrichtung bestimmt werden. Anschließend werden Informationen zum Blickpunkt des zweiten Nutzers an das Augmented-Reality-Gerät des ersten Nutzers übermittelt 42. Das Übermitteln 42 von Informationen kann dabei Privatsphäreneinstellungen des zweiten Nutzers unterliegen. Zur Umsetzung des Verfahrens muss der zweite Nutzer nicht notwendigerweise ebenfalls ein Augmented-Reality-Gerät nutzen.

Fig. 6 zeigt eine vereinfachte schematische Darstellung einer ersten Ausführungsform einer Vorrichtung 50 zum Bereitstellen von Informationen zur Steuerung einer Anzeige eines Augmented-Reality-Gerätes 1, 10 eines ersten Nutzers. Die Vorrichtung 50 hat einen Eingang 51, über den beispielsweise Daten zu einer Blickrichtung einen zweiten Nutzers empfangen werden können. Die Vorrichtung 50 hat zudem ein Blickpunktermittlungsmodul 52 zum Bestimmen eines Blickpunktes des zweiten Nutzers. Der Blickpunkt kann beispielsweise aus der Blickrichtung bestimmt werden. Über einen Ausgang 56 der Vorrichtung 50 werden Informationen zumindest zum Blickpunkt des zweiten Nutzers an das Augmented-Reality-Gerät 1, 10 des ersten Nutzers übermittelt. Das Übermitteln von Informationen kann dabei Privatsphäreneinstellungen des zweiten Nutzers unterliegen, die von einem Datenschutzmodul 53 umgesetzt werden.

Das Blickpunktermittlungsmodul 52 und das Datenschutzmodul 53 können von einer Kontrolleinheit 54 gesteuert werden. Über eine Benutzerschnittstelle 57 können gegebenenfalls Einstellungen des Blickpunktermittlungsmoduls 52, des Datenschutzmoduls 53 oder der Kontrolleinheit 54 geändert werden. Die in der Vorrichtung 50 anfallenden Daten können bei Bedarf in einem Speicher 55 der Vorrichtung 50 abgelegt werden, beispielsweise für eine spätere Auswertung oder für eine Nutzung durch die Komponenten der Vorrichtung 50. Das Blickpunktermittlungsmodul 52, das Datenschutzmodul 53 sowie die Kontrolleinheit 54 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 51 und der Ausgang 56 können als getrennte Schnittstellen oder als eine kombinierte bidirektionale Schnittstelle implementiert sein.

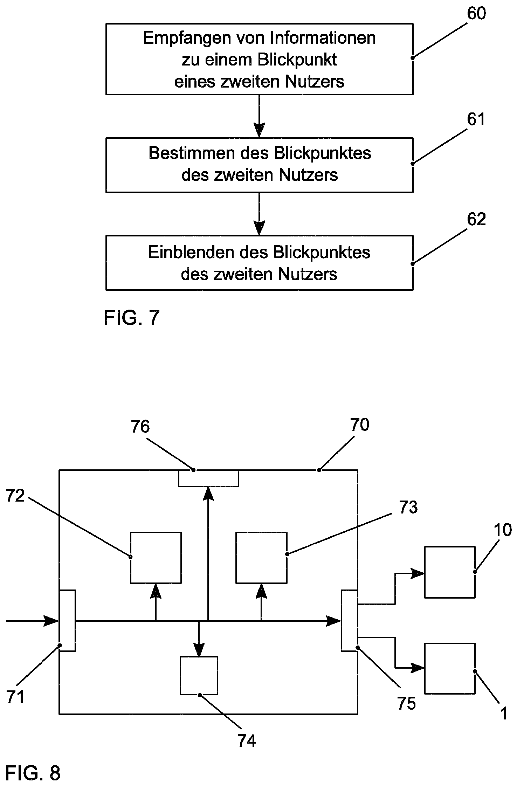

Fig. 7 zeigt schematisch ein Verfahren zur Steuerung einer Anzeige eines Augmented-Reality-Gerätes eines ersten Nutzers. In einem ersten Schritt werden Informationen zu einem Blickpunkt zumindest eines zweiten Nutzers empfangen 60. Aus diesen Informationen wird der Blickpunkt des zweiten Nutzers bestimmt 61 und dann in der Anzeige des Augmented-Reality-Gerätes des ersten Nutzers eingeblendet 62. Der Blickpunkt des zweiten Nutzers kann dabei in der Anzeige des Augmented-Reality-Gerätes des ersten Nutzers salient dargestellt werden. Ebenso können Elemente in der Anzeige des Augmented-Reality-Gerätes des ersten Nutzers gekennzeichnet werden, wenn sie auch dem zweiten Nutzer angezeigt werden.

Fig. 8 zeigt eine vereinfachte schematische Darstellung einer ersten Ausführungsform einer Vorrichtung 70 zur Steuerung einer Anzeige eines Augmented-Reality-Gerätes 1, 10 eines ersten Nutzers. Die Vorrichtung 70 hat einen Eingang 71, über den Informationen zu einem Blickpunkt zumindest eines zweiten Nutzers empfangen werden können. Die Vorrichtung 70 hat zudem einen Grafikgenerator 72 zum Einblenden des Blickpunktes des zweiten Nutzers in der Anzeige des Augmented-Reality-Gerätes 1, 10 des ersten Nutzers. Der Blickpunkt des zweiten Nutzers kann dabei in der Anzeige des Augmented-Reality-Gerätes des ersten Nutzers salient dargestellt werden. Ebenso können Elemente in der Anzeige des Augmented-Reality-Gerätes des ersten Nutzers gekennzeichnet werden, wenn sie auch dem zweiten Nutzer angezeigt werden. Die vom Grafikgenerator 72 generierte Anzeige wird über einen Ausgang 75 der Vorrichtung 70 an das Augmented-Reality-Gerät 1, 10 des ersten Nutzers ausgegeben. Alternativ kann auch lediglich eine Anweisung ausgegeben werden, eine entsprechende Anzeige zu generieren.

Der Grafikgenerator 72 kann von einer Kontrolleinheit 73 gesteuert werden. Über eine Benutzerschnittstelle 76 können gegebenenfalls Einstellungen des Grafikgenerators 72 oder der Kontrolleinheit 73 geändert werden. Die in der Vorrichtung 70 anfallenden Daten können bei Bedarf in einem Speicher 74 der Vorrichtung 70 abgelegt werden, beispielsweise für eine spätere Auswertung oder für eine Nutzung durch die Komponenten der Vorrichtung 70. Der Grafikgenerator 72 sowie die Kontrolleinheit 73 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 71 und der Ausgang 75 können als getrennte Schnittstellen oder als eine kombinierte bidirektionale Schnittstelle implementiert sein. Im beschriebenen Beispiel ist die Vorrichtung 70 eine eigenständige Komponente. Sie kann aber ebenso in der Augmented-Reality-Display-Vorrichtung 1, 10 des ersten Nutzers oder in einem Steuergerät der Augmented-Reality-Display-Vorrichtung 1, 10 integriert sein.

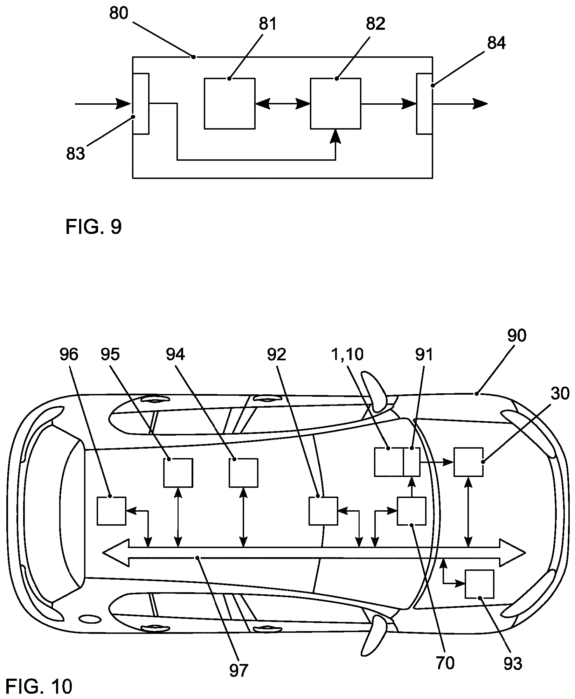

Fig. 9 zeigt eine vereinfachte schematische Darstellung einer zweiten Ausführungsform der Vorrichtungen aus Fig. 4, Fig. 6 und Fig. 8. Die Vorrichtung 80 weist einen Prozessor 82 und einen Speicher 81 auf. Beispielsweise handelt es sich bei der Vorrichtung 80 um einen Computer oder ein Steuergerät. Im Speicher 81 sind Instruktionen abgelegt, die die Vorrichtung 80 bei Ausführung durch den Prozessor 82 veranlassen, die Schritte gemäß einem der beschriebenen Verfahren auszuführen. Die im Speicher 81 abgelegten Instruktionen verkörpern somit ein durch den Prozessor 82 ausführbares Programm, welches das Verfahren realisiert. Die Vorrichtung 80 hat einen Eingang 83 zum Empfangen von Informationen. Vom Prozessor 82 generierte Daten werden über einen Ausgang 84 bereitgestellt. Darüber hinaus können sie im Speicher 81 abgelegt werden. Der Eingang 83 und der Ausgang 84 können zu einer bidirektionalen Schnittstelle zusammengefasst sein.

Der Prozessor 82 kann eine oder mehrere Prozessoreinheiten umfassen, beispielsweise Mikroprozessoren, digitale Signalprozessoren oder Kombinationen daraus.

Die Speicher 35, 55, 74, 81 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 10 stellt schematisch ein Kraftfahrzeug 90 dar, in dem eine erfindungsgemäße Lösung realisiert ist. Das Kraftfahrzeug 90 weist eine Augmented-Reality-Display-Vorrichtung 1, 10 mit einem zugehörigen Steuergerät 91 auf. Weiterhin weist das Kraftfahrzeug 90 eine Vorrichtung 30 zum Bereitstellen von Informationen durch das Augmented-Reality-Gerät 1, 10 sowie eine Vorrichtung 70 zur Steuerung einer Anzeige des Augmented-Reality-Gerätes 1, 10 auf. Die Vorrichtungen 30, 70 können natürlich auch in die Augmented-Reality-Display-Vorrichtung 1, 10 oder in das Steuergerät 91 der Augmented-Reality-Display-Vorrichtung 1, 10 integriert sein. Weitere Komponenten des Kraftfahrzeugs 90 sind eine Kamera 92 zur Innenraumüberwachung und ein Sensorsystem 93 zur Umgebungserfassung, ein Navigationssystem 94 sowie eine Datenübertragungseinheit 95. Mittels der Datenübertragungseinheit 95 kann eine Verbindung zu einem Backend aufgebaut werden. Zur Speicherung von Daten ist ein Speicher 96 vorhanden. Der Datenaustausch zwischen den verschiedenen Komponenten des Kraftfahrzeugs 90 erfolgt über ein Netzwerk 97.

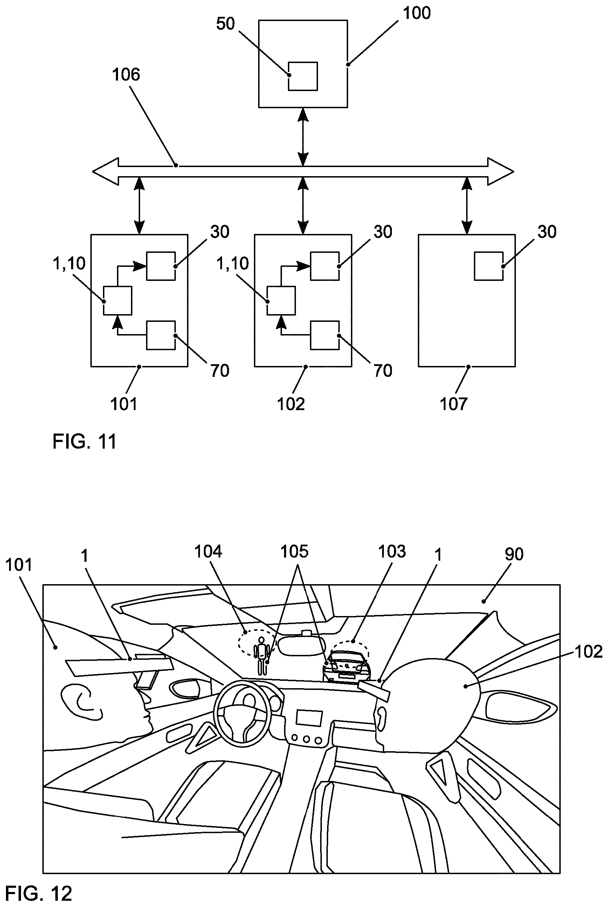

Nachfolgend sollen eine bevorzugte Ausführungsform der Erfindung anhand der Figuren 11 und 12 beschrieben werden.

Fig. 11 zeigt schematisch ein Systemdiagramm der erfindungsgemäßen Lösung. Beispielhaft sind drei Nutzer 101, 102, 107 über ein Netzwerk 106 an ein Backend 100 angebunden. Sowohl der erste Nutzer 101 als auch der zweite Nutzer 102 verwenden ein Augmented-Reality-Gerät 1, 10. Dementsprechend sind auf Seiten dieser beiden Nutzer 101, 102 jeweils sowohl eine Vorrichtung 30 zum Bereitstellen von Informationen durch das Augmented-Reality-Gerät 1, 10 als auch eine Vorrichtung 70 zur Steuerung der Anzeige des Augmented-Reality-Gerätes 1, 10 vorgesehen. Die Vorrichtungen 30 zum Bereitstellen von Informationen erfassen Daten zur Blickrichtung oder zum Blickpunkt der beiden Nutzer 101, 102 sowie gegebenenfalls Daten zu Objekten im Sichtfeld der Nutzer 101, 102 und übermitteln die erfassten Daten über das Netzwerk 106 an das Backend 100. Der weitere Nutzer 107 benutzt selbst kein Augmented-Reality-Gerät, allerdings werden durch eine geeignete Sensorik auch Informationen zu seiner Blickrichtung gesammelt und über das Netzwerk 106 an das Backend 100 übermittelt. Im Backend 100 erfolgt eine Auswertung und Verarbeitung der empfangenen Informationen. Mittels einer Vorrichtung 50 zum Bereitstellen von Informationen zur Steuerung der Anzeigen der Augmented-Reality-Geräte 1, 10 werden Informationen über die Blickpunkte der verschiedenen Nutzer 101, 102, 107 an die relevanten Nutzer 101, 102 übermittelt. Die Vorrichtungen 70 zur Steuerung der Anzeige der Augmented-Reality-Geräte 1, 10 sorgen dann dafür, dass die Blickpunkte der verschiedenen Nutzer 101, 102, 107 in den Anzeigen der Augmented-Reality-Geräte 1, 10 eingeblendet werden.

Fig. 12 zeigt schematisch ein Anwendungsbeispiel, das dem Verständnis der erfindungsgemäßen Lösung dient. In einem Kraftfahrzeug 90 befinden sich ein erster Nutzer 101 und ein zweiter Nutzer 102. Beide Nutzer verwenden eine Augmented-Reality-Brille 1. Vor dem Kraftfahrzeug 90, im Sichtfeld der beiden Nutzer 101, 102, befinden sich zwei Objekte 105. Im Beispiel sind dies ein Fußgänger sowie ein weiteres Kraftfahrzeug. Der Blickpunkt 103 des ersten Nutzers 103, dem Fahrer des Kraftfahrzeugs 90, liegt auf dem vorausfahrenden Kraftfahrzeug. Der Blickpunkt 104 des zweiten Nutzers 102 liegt hingegen auf dem Fußgänger.

Im Kraftfahrzeug 90 erfolgt eine Bestimmung der Blickpunkte 103, 104 der beiden Nutzer 101, 102. Dazu können beispielsweise im Kraftfahrzeug 90 verbaute Beobachtungskameras (nicht dargestellt) genutzt werden, mit denen die Kopfausrichtung der Fahrzeuginsassen erfasst wird. Diese entspricht zumindest annähernd der jeweiligen Blickrichtung. Alternativ oder zusätzlich kann auch eine Sensorik zur Posenbestimmung der Augmented-Reality-Brillen 1 für diesen Zweck genutzt werden. Diese Sensorik kann Bestandteil der Augmented-Reality-Brillen 1 oder auch im Kraftfahrzeug 90 verbaut sein. Anders als in der beanspruchten Lösung werden die jeweiligen aus der Blickrichtung ermittelten Blickpunkte im lokalen Netzwerk an die angeschlossenen Augmented-Reality-Geräte weitergegeben. Im Beispiel sind dies die Augmented-Reality-Brillen 1 der Fahrzeuginsassen. Jedes der angeschlossenen Augmented-Reality-Geräte empfängt diese Information und blendet die jeweiligen Blickpunkte lagerichtig in das Sichtfeld des Nutzers 101, 102 ein. Beispielsweise bekommt das vom Blick des jeweils anderen Nutzers 101, 102 getroffene Objekt 105 ein Highlight. Optionen dafür sind z.B. eine farbliche Hervorhebung mittels Farbton, Sättigung, Helligkeit, usw., eine direkte Anzeige des Blickpunktes 103,104 auf der Oberfläche des getroffenen Objektes 105, eine an das Objekt 105 angrenzende Markierung oder eine Anzeige eines Texthinweises bzw. einer Annotation.

Je nach Anwendungsfall ist es nicht zwingend erforderlich, den Blickpunkt aller an das lokale Netzwerk angebundenen Nutzer jeweils für alle Anwender darzustellen. Es kann auch wünschenswert sein, den Blickpunkt jeweils nur zu bestimmen und zu Zwecken des Mobilitätsanbieters auszuwerten, ihn dabei jedoch nicht den einzelnen Anwendern mitzuteilen. Hierbei kann durch die Art der Darstellung zwischen Elementen unterschieden werden, welche für mehrere Anwender sichtbar sind, und Elementen, welche nur für einen Anwender sichtbar sind.

Anstelle der Beschränkung auf ein lokales Netzwerk wird erfindungsgemäß eine Backend-Funktionalität zum Teilen der jeweiligen Blickpunkte genutzt. Die Anwender können dabei vorzugsweise in ihrer jeweiligen Augmented-Reality-Anwendung in den Einstellungen zu Privatsphäre bestimmen, ob sie ihren Blickpunkt teilen möchten oder nicht. Stimmen sie der Weitergabe zu, übermittelt das zugehörige Augmented-Reality-Gerät fortlaufend die Blickrichtung oder Blickpunkt an das Backend. Dieses teilt den aktuellen Blickpunkt den berechtigten Augmented-Reality-Geräten in der Nähe des Anwenders mit. Bis zu welcher Entfernung ein Gerät als "in der Nähe" gilt, durch die Anwender individuell geregelt werden.

Die Auswertung der Blickpunkte im Backend ermöglicht zahlreiche Anwendungen. Während der Fahrt mit einem (autonomen) Taxi können die Blickpunkte anderer Fahrgäste angezeigt werden. Darauf kann ein Spiel aufbauen, welches nur durch gleichzeitiges fokussieren bzw. Ausrichten des Blickes auf denselben Punkt gewonnen werden kann. Der Punkt kann beispielsweise ein bewegliches Objekt sein. Bei einer anderen Anwendung wird erfasst, ob ein Objekt von einer Person oder mehreren Personen betrachtet wird. Schaut ein Betrachter allein auf das Objekt, z.B. eine Sehenswürdigkeit, werden nur ihn allein betreffende Details angezeigt. Schauen zwei oder mehr Betrachter auf das Objekt, werden hingegen Vorschläge für einen gemeinsamen Besuch präsentiert. Entsprechend einer anderen Anwendung wird beim Blick eines Anwenders auf ein (leeres, nicht bestelltes) Taxi jeweils angezeigt, wie viele Personen sich aus dem nahen Umfeld noch für dieses Fahrzeug interessieren.

Die Auswertung der empfangenen Informationen im Backend kann eine zeitliche Komponente umfassen. Verharrt beispielweise ein Blick in einem bestimmten Bereich mindestens für einen definierten Zeitraum, kann dies im Backend gespeichert werden. Diese Information kann unter anderem für unternehmensspezifische Analysen genutzt werden, z.B. um festzustellen, woran ein Anwender Interesse hat. Die Interessen eines Anwenders sind insbesondere für Werbezwecke relevant. Die Information kann auch als Eingabewert für Augmented-Reality-Anwendungen genutzt werden. Beispielsweise kann dem Anwender mitgeteilt werden, dass am Vortag eine bestimmte Anzahl von Personen ein bestimmtes Objekt betrachtet haben. Ebenso können beim Blick auf eine Sehenswürdigkeit die von anderen Personen meistbetrachteten Stellen eines definierten vergangenen Zeitraums markiert werden.

### Bezugszeichenliste

- 1: Augmented-Reality-Brille
- 2: Kamera
- 3: Schnittstelle
- 4: Posenbestimmungsvorrichtung
- 5: Grafikeinheit
- 6: Projektionseinheit
- 10: Head-up-Display
- 11: Bildgebende Einheit
- 12: Optisches Modul
- 13: Projektionsfläche
- 20: Bestimmen einer Blickrichtung
- 21: Bestimmen eines Blickpunktes
- 22: Bestimmen eines Objektes im Sichtfeld
- 23: Übermitteln von Informationen an angebundene Vorrichtung
- 30: Vorrichtung
- 31: Eingang
- 32: Blickpunktbestimmungsmodul
- 33: Datenschutzmodul
- 34: Kontrolleinheit
- 35: Speicher
- 36: Ausgang
- 37: Benutzerschnittstelle
- 40: Empfangen von Daten zu einer Blickrichtung eines zweiten Nutzers
- 41: Bestimmen eines Blickpunktes des zweiten Nutzers
- 42: Übermitteln von Informationen an ein Augmented-Reality-Gerät eines ersten Nutzers
- 50: Vorrichtung
- 51: Eingang
- 52: Blickpunktermittlungsmodul
- 53: Datenschutzmodul
- 54: Kontrolleinheit
- 55: Speicher
- 56: Ausgang
- 57: Benutzerschnittstelle
- 60: Empfangen von Informationen zu einem Blickpunkt eines zweiten Nutzers
- 61: Bestimmen des Blickpunktes des zweiten Nutzers
- 62: Einblenden des Blickpunktes des zweiten Nutzers
- 70: Vorrichtung
- 71: Eingang
- 72: Grafikgenerator
- 73: Kontrolleinheit
- 74: Speicher
- 75: Ausgang
- 76: Benutzerschnittstelle
- 80: Vorrichtung
- 81: Speicher
- 82: Prozessor
- 83: Eingang
- 84: Ausgang
- 90: Kraftfahrzeug
- 91: Steuergerät der Augmented-Reality-Display-Vorrichtung
- 92: Kamera
- 93: Sensorsystem
- 94: Navigationssystem
- 95: Datenübertragungseinheit
- 96: Speicher
- 97: Netzwerk
- 100: Backend
- 101: Erster Nutzer
- 102: Zweiter Nutzer
- 103: Blickpunkt des ersten Nutzers
- 104: Blickpunkt des zweiten Nutzers
- 105: Objekt
- 106: Netzwerk
- 107: Weiterer Nutzer

## Patentansprüche

1. Verfahren zur Steuerung einer Anzeige eines Augmented-Reality-Gerätes (1, 10) eines ersten Nutzers (101), mit den Schritten:
- Empfangen (60) von Informationen zu einem Blickpunkt (104) zumindest eines zweiten Nutzers (102) durch ein Backend (100);
- Übermitteln des Blickpunktes (104) des zweiten Nutzers (102) an das Augmented-Reality-Gerät (1, 10) des ersten Nutzers (101) durch das Backend (100); und
- Anzeigen (62) des Blickpunktes (104) des zweiten Nutzers (102) in der Anzeige des Augmented-Reality-Gerätes (1, 10) des ersten Nutzers (101);
**dadurch gekennzeichnet, dass** der Blickpunkt (104) des zweiten Nutzers (102) nur dann vom Backend (100) an das Augmented-Reality-Gerät (1, 10) des ersten Nutzers (101) übermittelt wird, wenn sich das Augmented-Reality-Gerät (1, 10) des ersten Nutzers (101) in der Nähe des zweiten Nutzers (102) befindet, wobei vom zweiten Nutzer (102) individuell regelbar ist, bis zu welcher Entfernung ein Gerät als in der Nähe gilt.

2. Verfahren gemäß Anspruch 1, wobei durch Erfassen einer Kopfausrichtung oder mittels Eye-Tracking eine Blickrichtung des ersten Nutzers (101) erfasst wird (20) und der Blickpunkt (103) aus der Blickrichtung bestimmt wird (21).

3. Verfahren gemäß Anspruch 1, wobei im Backend (100) eine zeitbezogene Auswertung der übermittelten Informationen erfolgt.

4. Verfahren gemäß einem der vorherigen Ansprüche, wobei das Übermitteln von Informationen an das Augmented-Reality-Gerät (1, 10) des ersten Nutzers (101) oder das Übermitteln (23) von Informationen an das Backend (100) Privatsphäreneinstellungen der Nutzer (101, 102) unterliegt.

5. Verfahren gemäß einem der vorherigen Ansprüche, wobei der Blickpunkt (104) des zweiten Nutzers (102) in der Anzeige des Augmented-Reality-Gerätes (1, 10) des ersten Nutzers (101) salient dargestellt wird oder Elemente in der Anzeige des Augmented-Reality-Gerätes (1, 10) des ersten Nutzers (101) gekennzeichnet werden, wenn sie auch dem zweiten Nutzer (102) angezeigt werden.

6. Computerprogramm mit Instruktionen, die bei Ausführung durch einen Computer den Computer zur Ausführung der Schritte eines Verfahrens gemäß einem der Ansprüche 1 bis 5 veranlassen.

7. System zur Steuerung einer Anzeige eines Augmented-Reality-Gerätes (1, 10) eines ersten Nutzers (101), mit:
- einem Backend (100), das eingerichtet ist, Informationen zu einem Blickpunkt (104) zumindest eines zweiten Nutzers (102) zu empfangen (60) und den Blickpunkt (104) des zweiten Nutzers (102) an das Augmented-Reality-Gerät (1, 10) des ersten Nutzers (101) zu übermitteln; und
- einer Vorrichtung (70) zur Steuerung der Anzeige des Augmented-Reality-Gerätes (1, 10) des ersten Nutzers (101), mit einem Eingang (71) zum Empfangen (60) des Blickpunktes (104) des zweiten Nutzers (102) vom Backend (100) und einem Grafikgenerator (72) zum Anzeigen des Blickpunktes (104) des zweiten Nutzers (102) in der Anzeige des Augmented-Reality-Gerätes (1, 10) des ersten Nutzers (101);
**dadurch gekennzeichnet, dass** der Blickpunkt (104) des zweiten Nutzers (102) nur dann vom Backend (100) an das Augmented-Reality-Gerät (1, 10) des ersten Nutzers (101) übermittelt wird, wenn sich das Augmented-Reality-Gerät (1, 10) des ersten Nutzers (101) in der Nähe des zweiten Nutzers (102) befindet, wobei vom zweiten Nutzer (102) individuell regelbar ist, bis zu welcher Entfernung ein Gerät als in der Nähe gilt.

## Claims

1. Method for controlling a display of an augmented reality device (1, 10) of a first user (101), comprising the steps of:
- a backend (100) receiving (60) information about a viewpoint (104) of at least a second user (102);
- the backend (100) transmitting the viewpoint (104) of the second user (102) to the augmented reality device (1, 10) of the first user (101); and
- displaying (62) the viewpoint (104) of the second user (102) in the display of the augmented reality device (1, 10) of the first user (101),
**characterized in that** the viewpoint (104) of the second user (102) is only transmitted from the backend (100) to the augmented reality device (1, 10) of the first user (101) when the augmented reality device (1, 10) of the first user (101) is in the vicinity of the second user (102), it being possible for the second user (102) to individually control the distance up to which a device is considered to be in the vicinity.

2. Method according to claim 1, wherein a viewing direction of the first user (101) is detected (20) by detecting a head orientation or by means of eye tracking and the viewpoint (103) is determined (21) from the viewing direction.

3. Method according to claim 1, wherein a time-related evaluation of the transmitted information takes place in the backend (100).

4. Method according to any one of the preceding claims, wherein the transmission of information to the augmented reality device (1, 10) of the first user (101) or the transmission (23) of information to the backend (100) is subject to privacy settings of the users (101, 102).

5. Method according to any one of the preceding claims, wherein the viewpoint (104) of the second user (102) is displayed saliently in the display of the augmented reality device (1, 10) of the first user (101) or elements are marked in the display of the augmented reality device (1, 10) of the first user (101) when they are also displayed to the second user (102).

6. Computer program having instructions that, when executed by a computer, cause the computer to carry out the steps of a method according to any one of claims 1 to 5.

7. System for controlling a display of an augmented reality device (1, 10) of a first user (101), comprising:
- a backend (100) configured to receive (60) information about a viewpoint (104) of at least a second user (102) and to transmit the viewpoint (104) of the second user (102) to the augmented reality device (1, 10) of the first user (101); and
- an apparatus (70) for controlling the display of the augmented reality device (1, 10) of the first user (101), having an input (71) for receiving (60) the viewpoint (104) of the second user (102) from the backend (100) and a graphics generator (72) for displaying the viewpoint (104) of the second user (102) in the display of the augmented reality device (1, 10) of the first user (101), **characterized in that** the viewpoint (104) of the second user (102) is only transmitted from the backend (100) to the augmented reality device (1, 10) of the first user (101) when the augmented reality device (1, 10) of the first user (101) is in the vicinity of the second user (102), it being possible for the second user (102) to individually control the distance up to which a device is considered to be in the vicinity.

## Revendications

1. Procédé de commande d'un affichage d'un appareil à réalité augmentée (1, 10) d'un premier utilisateur (101), comportant les étapes de :
- réception (60) d'informations concernant un point de vue (104) d'au moins un second utilisateur (102) par un backend (100) ;
- transmission du point de vue (104) du second utilisateur (102) à l'appareil à réalité augmentée (1, 10) du premier utilisateur (101) par le backend (100) ; et
- affichage (62) du point de vue (104) du second utilisateur (102) dans l'affichage de l'appareil à réalité augmentée (1, 10) du premier utilisateur (101) ;
**caractérisé en ce que** le point de vue (104) du second utilisateur (102) n'est transmis par le backend (100) à l'appareil à réalité augmentée (1, 10) du premier utilisateur (101) que si l'appareil à réalité augmentée (1, 10) du premier utilisateur (101) se trouve à proximité du second utilisateur (102), dans lequel le second utilisateur (102) peut régler individuellement jusqu'à quelle distance un appareil est considéré comme étant à proximité.

2. Procédé selon la revendication 1, dans lequel une direction de regard du premier utilisateur (101) est détectée (20) par détection d'une orientation de la tête ou par le biais d'un suivi oculaire, et le point de vue (103) est déterminé (21) à partir de la direction de regard.

3. Procédé selon la revendication 1, dans lequel une évaluation en fonction du temps des informations transmises est effectuée dans le backend (100).

4. Procédé selon l'une des revendications précédentes, dans lequel la transmission d'informations à l'appareil à réalité augmentée (1, 10) du premier utilisateur (101) ou la transmission (23) d'informations au backend (100) est soumise à des paramètres de confidentialité des utilisateurs (101, 102).

5. Procédé selon l'une des revendications précédentes, dans lequel le point de vue (104) du second utilisateur (102) est représenté de manière saillante dans l'affichage de l'appareil à réalité augmentée (1, 10) du premier utilisateur (101) ou des éléments sont caractérisés dans l'affichage de l'appareil à réalité augmentée (1, 10) du premier utilisateur (101) lorsqu'ils sont également affichés au second utilisateur (102).

6. Programme d'ordinateur comportant des instructions, lesquelles, lors de leur exécution par un ordinateur, amènent l'ordinateur à exécuter les étapes d'un procédé selon l'une des revendications 1 à 5.

7. Système de commande d'un affichage d'un appareil à réalité augmentée (1, 10) d'un premier utilisateur (101), comportant :
- un backend (100) qui est conçu pour recevoir (60) des informations concernant un point de vue (104) d'au moins un second utilisateur (102) et pour transmettre le point de vue (104) du second utilisateur (102) à l'appareil à réalité augmentée (1, 10) du premier utilisateur (101); et
- un dispositif (70) de commande de l'affichage de l'appareil à réalité augmentée (1, 10) du premier utilisateur (101), comportant une entrée (71) pour recevoir (60) le point de vue (104) du second utilisateur (102) du backend (100) et un générateur graphique (72) pour afficher le point de vue (104) du second utilisateur (102) dans l'affichage de l'appareil à réalité augmentée (1, 10) du premier utilisateur (101); **caractérisé en ce que** le point de vue (104) du second utilisateur (102) n'est transmis par le backend (100) à l'appareil à réalité augmentée (1, 10) du premier utilisateur (101) que si l'appareil à réalité augmentée (1, 10) du premier utilisateur (101) se trouve à proximité du second utilisateur (102), dans lequel le second utilisateur (102) peut régler individuellement jusqu'à quelle distance un appareil est considéré comme étant à proximité.
